(19) Europäisches Patentamt / European Patent Office / Office européen des brevets

(11) **EP 2 134 024 A2**

(12) **EUROPEAN PATENT APPLICATION**

(43) Date of publication:
**16.12.2009 Bulletin 2009/51**

(51) Int Cl.:
***H04L 5/00*** *(2006.01)*

(21) Application number: **09157766.8**

(22) Date of filing: **09.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **09.06.2008 JP 2008150359**

(71) Applicant: **Fujitsu Limited**
**Kawasaki-shi, Kanagawa 211-8588 (JP)**

(72) Inventor: **Kimura, Dai**
**Kawasaki-shi, Kanagawa 211-8588 (JP)**

(74) Representative: **Stebbing, Timothy Charles**
**Haseltine Lake LLP**
**Lincoln House, 5th Floor**
**300 High Holborn**
**London WC1V 7JH (GB)**

(54) **Control channel transmission method and radio communication apparatus**

(57)     A control channel transmission method in a radio communication apparatus (10) which has a plurality of antennas (17-1, 17-2), including, generating signals which are orthogonal to each other on a frequency axis between each of the antennas; modulating the signals using a control signal (Control Bit 1, Control Bit 2) corresponding to a control channel respectively; and transmitting the modulated signals from each of the antennas (17-1, 17-2) using a single carrier transmission.

## FIG.1A

10

**Description**

The present invention is related to a control channel transmission method and a radio communication apparatus.

LTE (Long Term Evolution) is under consideration as a next generation communication method of third generation portable telephones. In LTE, control information in the uplink is transmitted using a control channel called "PUCCH (Physical Uplink Control Channel)". For example, ACK/NACK to a downlink packet transmission, and CQI which is downlink quality information, are transmitted using PUCCH.

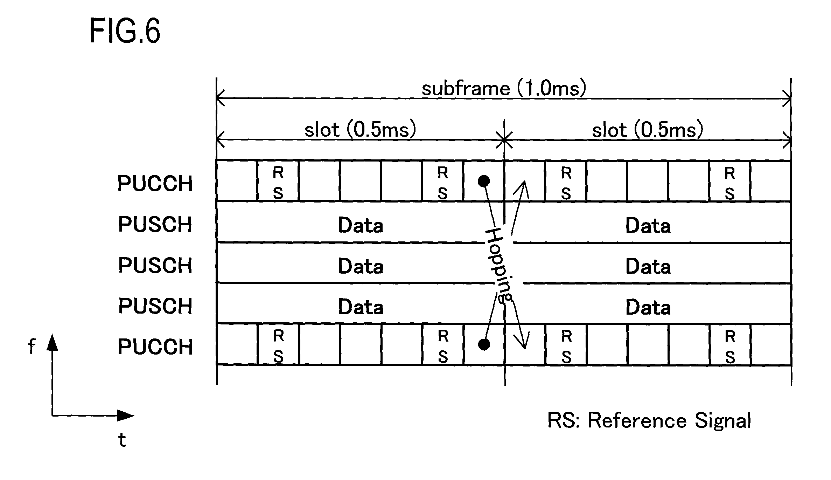

Fig. 6 depicts a diagram depicting an example of a frame format of PUCCH. A subframe of 1-ms is divided into two halves, and each of the divided halves (slots) consists of seven blocks (FFT blocks). For example, as depicted in Fig. 6, the second and sixth blocks of each slot include a reference signal (see, for example, TS36.211 V8.0). PUSCH (Physical Uplink Shared Channel) is a channel for transmitting data, and is allocated to each subframe of each user on a time axis and frequency axis.

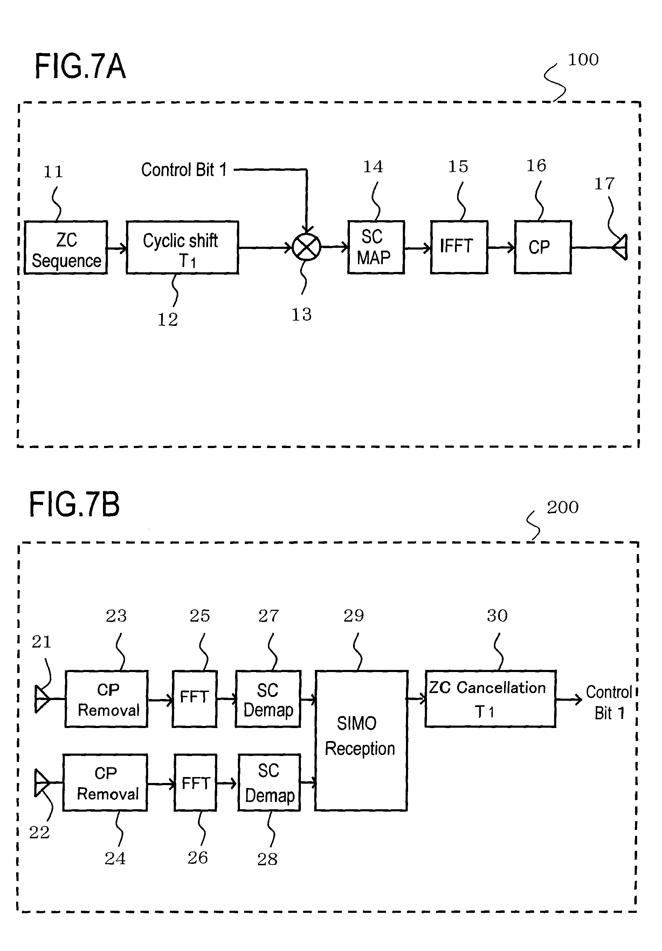

Fig. 7A and Fig. 7B depict diagrams depicting configuration examples of a transmission apparatus 100 and receive apparatus 200 which transmits and receives PUCCH respectively. The transmission apparatus 100 generates a signal of a ZC (Zadoff-Chu) sequence in a ZC sequence generation unit 11, adds a cyclic shift on the time axis in a cyclic shift unit 12, and modulates this signal using a control bit (control bit corresponding to PUCCH transmission symbol) in a modulation unit 13. Then the modulated signal is mapped in a predetermined frequency band in a subcarrier mapping unit 14, and is converted into a signal on the time axis in an IFFT (Inverse Fast Fourier Transform) unit 15, and then CP (Cyclic Prefix) is added in a CP addition unit 16, and the resulting signal is transmitted via an antenna 17.

In the receive apparatus 200, on the other hand, transmission signals are received via two receive antennas 21 and 22, the respective CPs are removed from the received signals in CP removal units 23 and 24, the received signals are converted into signals on the frequency axis in FFT (Fast Fourier Transform) units 25 and 26, and the signals mapped in each subcarrier are extracted in subcarrier demapping units 27 and 28. And, inter-antenna combining is performed in an SIMO receive unit 29, a signal of the ZC sequence is cancelled in a ZC cancellation unit 30, and a control bit is output.

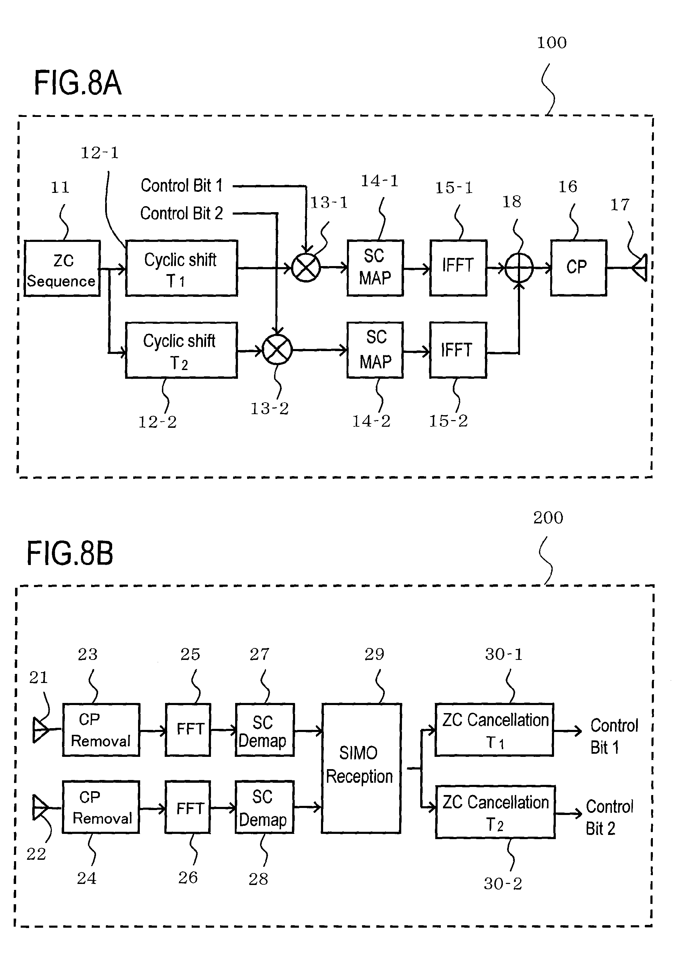

In LTE, multiplex transmission, based on a cyclic shift among users, that is multiplex transmission by a plurality of users, has also been proposed. Fig. 8A and Fig. 8B depict diagrams depicting configuration examples of a transmitter and receiver respectively, in such a case (see, for example, 3GPP R1-073658). As Fig. 8A and Fig. 8B depict, two different cyclic shift amounts are added to a ZC sequence generated in the ZC sequence generation unit 11 by two cyclic shift units 12-1 and 12-2 respectively, then the signals are modulated in modulation units 13-1 and 13-2 respectively, using different control bits, and are transmitted.

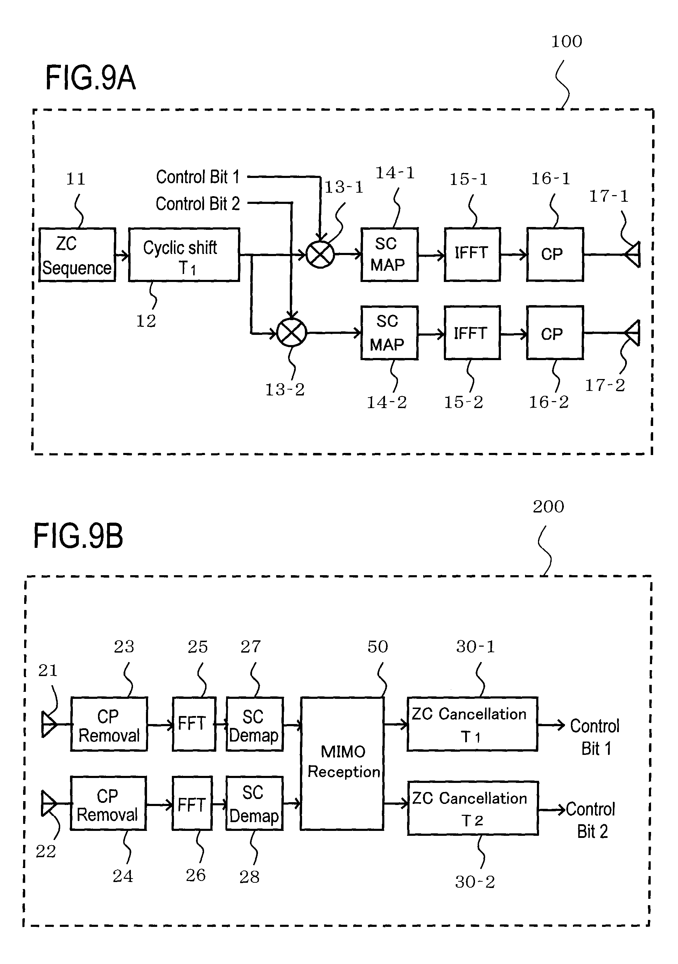

Another method under consideration is MIMO (Multi-Input Multi-Output), which improves throughput by transmitting different signals among transmission antennas. If transmission based on the MIMO method is being performed in the uplink data channel (PUSCH), transmission based on the MIMO method can also be used for the control channel (PUCCH). Fig. 9A and Fig. 9B depict diagrams depicting a configuration examples of a transmitter and receiver respectively, based on the MIMO method. Signals modulated by different control bits are transmitted via two transmission antennas 17-1 and 17-2.

However as depicted in Fig. 6, PUCCH can transmit only a predetermined number of blocks (number of symbols, 10 symbols per subframe in the example in Fig. 6) in 1-ms, excluding the reference signal (RS). Therefore a number of bits which a user can transmit in 1-ms is limited in the case of considering channel encoding (e.g. the number of bits are 5 bits if modulation method is QPSK and encoding rate is 1/4).

In the case of the example depicted as Fig. 8, the ZC sequences, to which different cyclic shift amounts are added, are modulated using different control bits, but the ZC sequences are sent after the two signals are added in an addition unit 18. This means that multi-carrier transmission is performed, and PAPR (Peak to Average Power Ratio) increases compared to a single carrier transmission (see Fig. 7A and Fig. 7B) where transmission data and pilot signals are multiplexed only on the time axis.

In the case of transmission based on the MIMO method depicted in Fig. 9A and Fig. 9B, on the other hand, an increase in PAPR can be prevented and throughput can be improved, but the signals between the transmission antennas 17-1 and 17-2 are not perfectly orthogonal to each other, so reception characteristics drop.

Accordingly, it is desirable to provide a control channel transmission method and a radio communication apparatus which increase a maximum number of transmission bits per user.

It is also desirable to provide a control channel transmission method and a radio communication apparatus which prevent an increase in PAPR.

It is further desirable to provide a control channel transmission method and radio communication apparatus which improve the reception characteristics.

According to an aspect of the invention, a control channel transmission method in a radio communication apparatus which has a plurality of antennas, includes steps of: generating signals which are orthogonal to each other on a frequency axis between each of the antennas; modulating the signals using a control signal corresponding to a control channel respectively; and transmitting the modulated signals from each of the antennas using a single carrier transmission.

The features and advantages of the invention will be realized and attained by means of the elements and combinations particularly pointed out in the claims.

It is to be understood that both the foregoing general description and the following detailed description are exemplary and explanatory and are not restrictive of the invention, as claimed.

Reference is made, by way of example only, to the accompanying drawings in which:

Fig. 1A and Fig. 1B are diagrams depicting a configuration example of a transmission apparatus and a receive apparatus respectively;

Fig. 2A and Fig. 2B are diagrams depicting another configuration examples of a transmission apparatus and a receive apparatus respectively;

Fig. 3A and Fig. 3B are diagrams depicting another configuration examples of a transmission apparatus and a receive apparatus respectively;

Fig. 4A and Fig. 4B are diagrams depicting another configuration examples of a transmission apparatus and a receive apparatus respectively;

Fig. 5A to Fig. 5C are diagrams depicting PUCCH allocation examples;

Fig. 6 is a diagram depicting an example of a frame format;

Fig. 7A and Fig. 7B are diagrams depicting conventional configuration examples of a transmission apparatus and a receive apparatus respectively;

Fig. 8A and Fig. 8B are diagrams depicting conventional configuration examples of a transmission apparatus and a receive apparatus respectively; and

Fig. 9A and Fig. 9B are diagrams depicting conventional configuration examples of a transmission apparatus and a receive apparatus respectively.

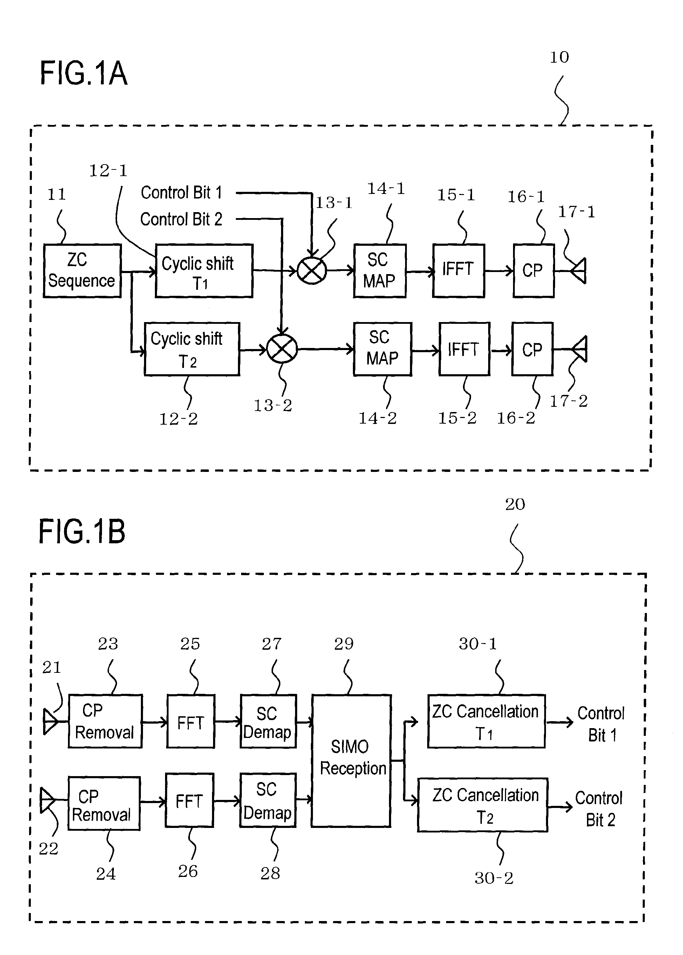

Preferred embodiments of the present invention will be explained with reference to accompanying drawings. Fig. 1A and Fig. 1B are diagrams depicting configuration examples of a transmission apparatus 10 and a receive apparatus 20 which transmits and receives a control channel, such as PUCCH, respectively. The transmission apparatus 10 is an apparatus at the transmission side of a radio communication apparatus, and the receive apparatus 20 is an apparatus at the receive side of the radio communication apparatus. For example, the transmission apparatus 10 is a terminal apparatus, and the receive apparatus 20 is a base station apparatus.

The transmission apparatus 10 includes a ZC sequence generation unit 11, cyclic shift units 12-1 and 12-2, modulation units 13-1 and 13-2, subcarrier mapping units 14-1 and 14-2, IFFT units 15-1 and 15-2, CP addition units 16-1 and 16-2, and transmission antennas 17-1 and 17-2.

The receive apparatus 20, on the other hand, includes receive antennas 21 and 22, CP removal units 23 and 24, FFT units 25 and 26, subcarrier demapping units 27 and 28, SIMO (Single-Input Multiple-Output) receive unit 29, and ZC cancellation units 30-1 and 30-2.

The ZC sequence generation unit 11 of the transmission apparatus 10 generates a signal of ZC sequence. The ZC sequence is a type of CAZAC (Constant Amplitude Zero Auto-Correlation) sequence, and the signal on the time axis after IFFT becomes a signal similar to the single carrier, and can implement low PAPR. The ZC sequence can be given by the following Expression 1.

[Expression 1]

$$c_{L,m,l} = \begin{cases} \exp\left[ j2\pi m \dfrac{ql + l^2/2}{L} \right] & (L = even) \\ \exp\left[ j2\pi m \dfrac{ql + l(l+1)/2}{L} \right] & (L = odd) \end{cases}$$

The ZC sequence given by Expression 1 has characteristics where the amplitude is 1, the time correlation is 0, and the amplitude is a constant even after transformation by FFT (or IFFT). The ZC sequence after IFFT is given by

[Expression 2]

$$s_{b,n} = \frac{1}{\sqrt{N}} \sum_{k=0}^{N-1} x_b c_{L,m,l}(k) e^{j2\pi \frac{k\Delta}{N}} e^{j2\pi \frac{nk}{N}}$$

Here $S_{b,n}$ indicates the nth sample in the bth block, N indicates an FFT (or IFFT) size, $\Delta$ indicates a cyclic shift amount, index l (k) indicates that the lth sequence of the ZC sequence is allocated to the kth subcarrier. xb indicates a transmission symbol in the bth block, and is constant within the block to implement a single carrier.

The cyclic shift unit 12-1 and 12-2 adds different cyclic shift amounts respectively on the time axis to the ZC sequence. By changing each of the cyclic shift amounts ($\Delta$ in Expression 2) in the cyclic shift units 12-1 and 12-2, transmission signals orthogonal to each other on the frequency axis are transmitted from the transmission antennas 17-1 and 17-2.

The modulation unit 13-1 and 13-2 modulate the ZC sequence to which the cyclic shift amount is added, using different control bits respectively. The control bit is a control bit corresponding to the transmission symbol of the control channel (e.g. PUCCH).

The subcarrier mapping units 14-1 and 14-2 allocate modulated ZC sequence to a predetermined frequency band (subcarrier mapping) respectively. By the subcarrier mapping, the ZC sequence is allocated to the frequency areas on both sides of the system band, for example, as depicted in Fig. 6.

The IFFT units 15-1 and 15-2 transform the output from the subcarrier mapping units 14-1 and 14-2 into signals on the time axis respectively, by inverse Fourier transform.

The CP addition unit 16-1 or 16-2 add CP to the output signal from the IFFT units 15-1 and 15-2 respectively.

The transmission antennas 17-1 and 17-2 transmit a signal to which CP is attached respectively. The transmission apparatus 10 transmits a control channel by a single carrier transmission (transmission data and pilot signals are multiplexed and sent only on the time axis).

In this way, compared with the case of transmitting using a single control bit (for example, see Fig. 7A), the number of symbols that can be transmitted increases in the transmission apparatus 10 since data is transmitted using two control bits. Therefore the number of users to which the transmission apparatus 10 can transmit data can be increased.

The transmission apparatus 10 does not perform addition (addition unit 18 in Fig. 8) after a different cyclic shift and different control bit are attached to the ZC sequence, so multi-carrier transmission is not performed. Hence the transmission apparatus 10 can prevent an increase in PAPR.

Also the transmission apparatus 10 transmits signals which are orthogonal to each other, from the transmission antennas 17-1 and 17-2 by changing the cyclic shift amounts in two cyclic shift units 12-1 and 12-2. Therefore unlike the MIMO transmission, the signals between the transmission antennas become orthogonal to each other, and the receive characteristics of the receive apparatus 20 improve compared with the MIMO transmission.

The receive antennas 21 and 22 of the receive apparatus 20 receive the transmission signals from the transmission apparatus 10 respectively.

The CP removal units 23 and 24 remove CP from the receive signal received from each receive antennas 21 and 22.

The FFT units 25 and 26 perform Fourier transform on the receive signals from which CP is removed, and convert the receive signals into signals on the frequency axis respectively.

The subcarrier demapping units 27 and 28 extract signals from the subcarrier allocated to the frequency band (subcarrier demapping).

The SIMO receive unit 29 performs inter-antenna combining on the extracted signals, and outputs the ZC sequence.

The ZC cancellation units 30-1 and 30-2 cancel the ZC sequence considering the cyclic shift amounts in the cyclic shift units 12-1 and 12-2 respectively, and output two control bits.

The ZC cancellation in the ZC cancellation units 30-1 and 30-2 is performed as follows. If there are two sequence of control bits, the receive signal of the subcarrier number k after subcarrier mapping is given by

[Expression 3]

$$Y_k = s_1 H_k X_k + s_2 H_k X_k e^{j\frac{\Delta k}{N}}$$

Here s1 indicates a transmission symbol corresponding to the control bit 1, s2 indicates a transmission symbol corresponding to the control bit 2, X indicates the ZF sequence, and $\Delta$ indicates a cyclic shift amount. H indicates channel response, which can be estimated using a known reference signal.

To the receive signal given by Expression 3, cancellation of the ZC sequence and frequency equivalence of the channel are performed in the ZC cancellation units 30-1 and 30-2.

[Expression 4]

$$\frac{X_k^* Y_k}{H_k} = s_1 + s_2 e^{j\frac{\Delta k}{N}}$$

Inverse Fourier transform (IFFT) is performed on the sequence given by Expression 4, and this sequence is converted into a sequence on the time axis as follows.

[Expression 5]

$$s_1 \delta(n) + s_2 \delta(n - \Delta)$$

In Expression 5, $\delta(n)$ indicates an impulse response, and has a value only when $\delta(0)$. Therefore the ZC cancellation unit 30-1 or 30-2 outputs transmission symbols S1 corresponding to the control bit 1 when n = 0 respectively, and outputs transmission symbols s2 corresponding to the control bit 1 when n = $\Delta$ respectively.

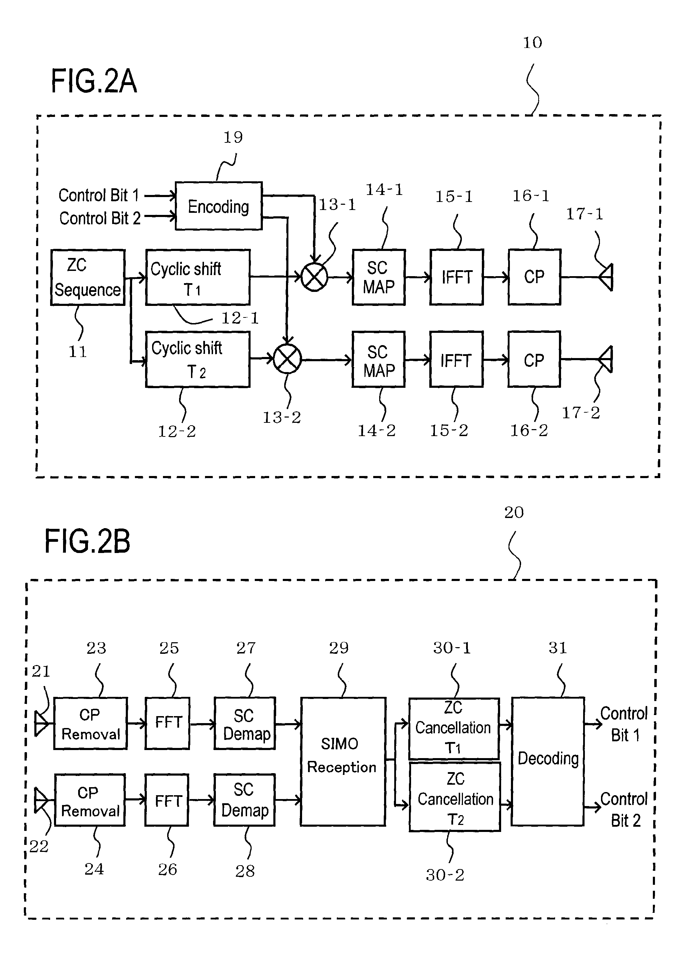

Another configuration example of the transmission apparatus 10 and the receive apparatus 20 is now described. Fig. 2A and Fig. 2B are diagrams depicting another configuration example. As Fig. 2A and Fig. 2B depict, the transmission apparatus 10 further includes an encoding unit 19 and the receive apparatus 20 further includes a decoding unit 31.

The encoding unit 19 encodes the two control bits together, and distributes the output to each modulation unit 13-1 and 13-2. The transmission apparatus 10, according to the present example, distributes the sequence of the encoded control bit into the antennas, and then performs modulation, so even more diversity gain between the transmission antennas 17-1 and 17-2 can be obtained for the transmission apparatus 10 of the above mentioned example (Fig. 1A and Fig. 1B) .

For the encoding in the encoding unit 19, Read-Muller encoding, for example, is used. Read-Muller encoding is an encoding method which is used for encoding TFCI (Transport Format Combination Indicator) information (information to indicate a format of a transport channel) according to a 3GPP standard (3GPP TS25.212). The encoding unit 19 encodes to 40 bits if the two control bits are five bits respectively, for example. In this case, the encoding rate is 1/4.

The decoding unit 31 of the receive apparatus 20 determines correlation of all the transmission patterns (e.g. 10 bits, 1024 types) for the signals from the ZC cancellation units 30-1 and 30-2, and decodes the control bits by selecting the transmission pattern which indicates the greatest correlation value.

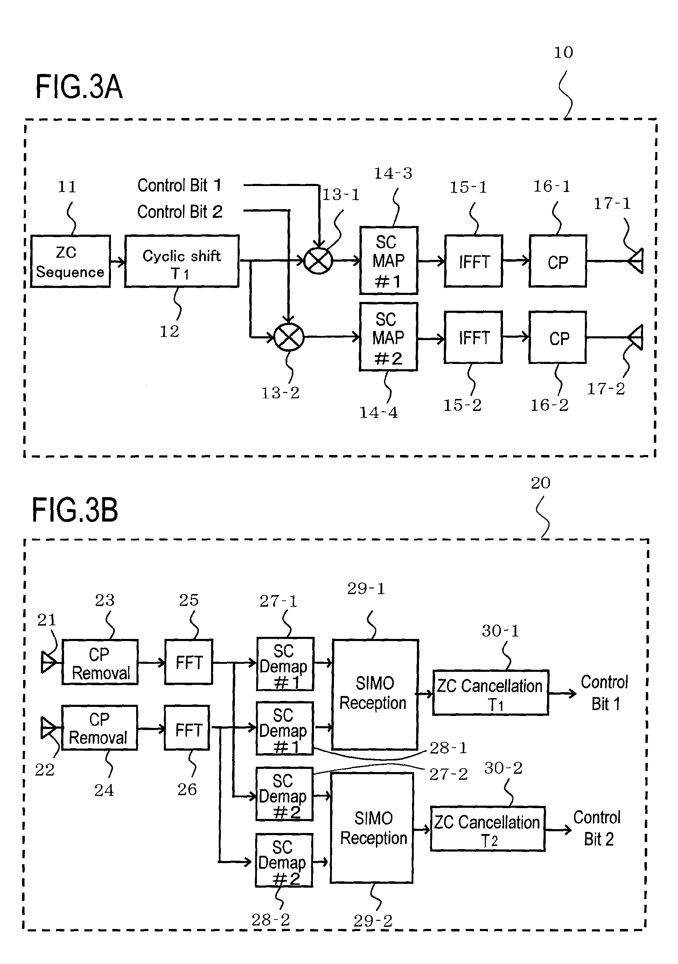

Fig. 3A and Fig. 3B are diagrams depicting another configuration example of the transmission apparatus 10 and the receive apparatus 20 respectively. The transmission apparatus 10 illustrated in Fig. 3A depicts a configuration example when different frequency bands are allocated to the transmission antennas 17-1 and 17-2 respectively.

As Fig. 3A depicts, there is only one cyclic shift unit 12, and the subcarrier mapping units 14-3 and 14-4 allocate subcarriers in different frequency bands to the modulated ZC sequence respectively. Signals in different transmission bands are transmitted from the transmission antennas 17-1 and 17-2 respectively.

The receive unit 20 further includes four subcarrier demapping units 27-1, 27-2, 28-1 and 28-2, and two SIMO receive units 29-1 and 29-2, as depicted in Fig. 3B.

The subcarrier demapping units 27-1 and 27-2 are for extracting signals from a subcarrier included in a receive signal received by the receive antenna 21, and correspond to the subcarrier mapping units 14-3 and 14-4 at the transmission apparatus 10 side respectively. In the same way, the subcarrier demapping units 28-1 and 28-2 are for a receive signal received by the receive antenna 22, and correspond to the subcarrier mapping units 14-3 and 14-4 at the transmission apparatus 10 side respectively.

The SIMO receive unit 29-1 performs inter-antenna combining of signals output from the subcarrier demapping units 27-1 and 28-1. The SIMO receive unit 29-2 performs inter-antenna combining of signals which are output from the subcarrier demapping units 27-2 and 28-2. Then ZC cancellation units 30-1 and 30-2 perform ZC cancellation, and output the control bits respectively.

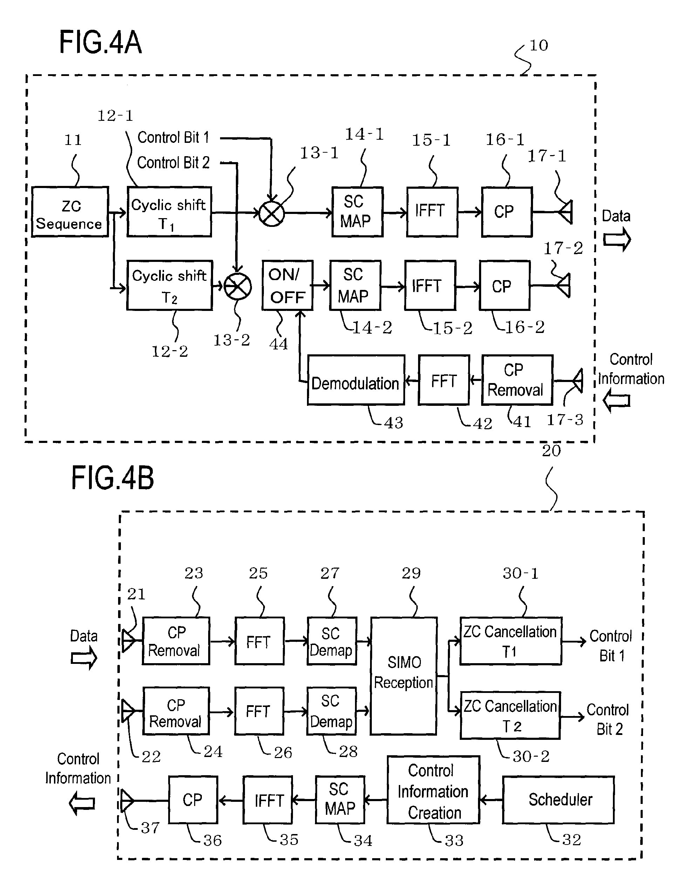

Fig. 4A and Fig. 4B are diagrams depicting another configuration example of the transmission apparatus 10 and the receive apparatus 20 respectively. The examples illustrated in Fig. 4A and Fig. 4B are examples of a case when the control information volume in the uplink is small, and the base station side (the receive apparatus 20) allocates the channel resource required only for transmitting the control information, and transmits data using one transmission antenna, for example.

As Fig. 4A depicts, the transmission apparatus 10 further includes a receive antenna 17-3, CP cancellation unit 41, FFT unit 42, demodulation unit 43 and ON/OFF control unit 44. The receive apparatus 20 illustrated in Fig. 4B further includes a scheduler 32, control information creation unit 33, subcarrier mapping unit 34, IFFT unit 35, CP attachment unit 36 and transmission antenna 37.

The scheduler 32 of the receive apparatus 20 manages the transmission schedule of the transmission apparatus 10, and when it is judged that the control information of the uplink can be handled sufficiently by one antenna, out of the transmission antennas 17-1 and 17-2, the scheduler 32 instructs the control information creation unit 33 to create the control information. The control information creation unit 33 creates the control information, and sends it in the downlink via the subcarrier mapping unit 34, IFFT unit 35, CP attachment unit 36 and transmission antenna 37.

The transmission apparatus 10 receives the control information via the receive antenna 17-3, and outputs the control information to the ON/OFF control unit 44 via the CP removal unit 41, FFT unit 42 and demodulation unit 43. The ON/OFF control unit 44 stops output of the modulated signal to the subcarrier mapping unit 14-2 using the control bit 2, according to the content of the demodulated control information. In this case, the control channel is transmitted using only the transmission antenna 17-1.

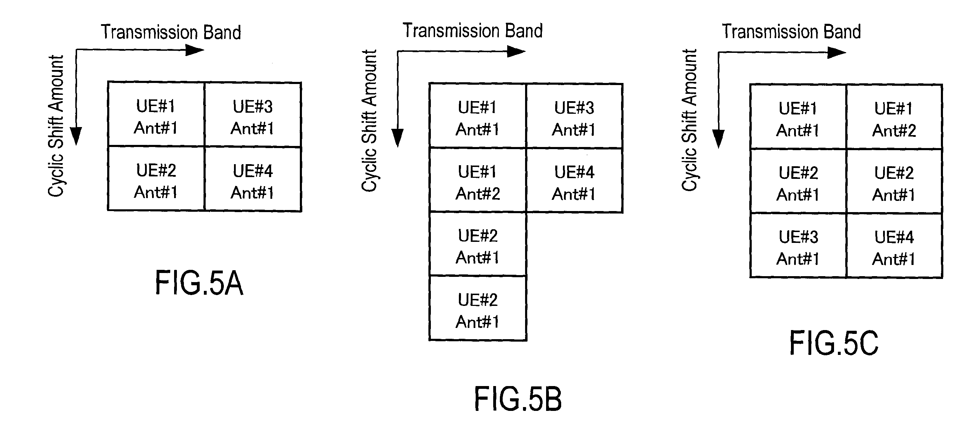

Fig. 5A to Fig. 5C are diagrams depicting allocation examples of the control channel (PUCCH). In each diagram, the ordinate indicates a cyclic shift amount, and the abscissa indicates a transmission band.

Fig. 5A depicts an example of transmitting the control channel via one transmission antenna 17 depicted in Fig. 7A. As Fig. 5A depicts, a different user is allocated to a different transmission band having a different cyclic shift amount respectively. In the transmission apparatus 10 illustrated in Fig. 7A, the cyclic shift unit 12 provides a different cyclic shift amount to the ZC sequence, and the subcarrier mapping unit 14 allocates a different transmission band to the ZC sequence to which a different cyclic shift amount is provided respectively, whereby the allocation depicted in Fig. 5A is implemented.

On the other hand, the transmission apparatus 10 (as illustrated in Fig. 1A and Fig. 2A) can allocate a same user to different cyclic shift amounts in a same transmission band when the number of transmission antennas of the user is "2", as depicted in Fig. 5B. This is implemented by allowing each subcarrier mapping unit 14-1 and 14-2 to use a common transmission band, and changing four types of cyclic shift amounts using the two cyclic shift units 12-1 and 12-2.

The transmission apparatus 10 (as illustrated in Fig. 3A) can also allocate a same user to different transmission bands when the number of transmission antennas of the user is "2", as depicted in Fig. 5C. This allocation is implemented by the sub-carrier mapping units 14-3 and 14-4 using different transmission bands respectively, and the cyclic shift unit 12 using a common cyclic shift amount.

All of the above examples were described using the two transmission antennas 17-1 and 17-2 of the transmission apparatus 10. But needless to say, the transmission apparatus 10 can be implemented using three, four or more antennas. In this case, the cyclic shift unit adjusts the cyclic shift amounts so that the transmission signals become orthogonal to each other between each transmission antenna.

The transmission apparatus 10 and receive apparatus 20 may be implemented by combining the above mentioned examples. For example, the example of encoding the control bits (Fig. 2A) may be implemented by the example of transmitting in different frequency bands (Fig. 3A), or the example of controlling transmission of the control bits using the control information from the receive apparatus 20 side (Fig. 4A and Fig. 4B).

The present invention can provide a control channel transmission method and a radio communication apparatus which increase a maximum number of transmission bits per user. The present invention can also provide a control channel transmission method and a radio communication apparatus which prevent an increase in PAPR. The present invention can also provide a control channel transmission method and a radio communication apparatus which improve the reception characteristics.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a depicting of the superiority and inferiority of the invention. Although the embodiment(s) of the present inventions have been described in detail, it should be understood that the various changes, substitutions, and alterations could be made hereto without departing from the scope of the claims.

## Claims

1. A control channel transmission method in a radio communication apparatus which has a plurality of antennas, comprising:

   generating signals which are orthogonal to each other on a frequency axis between each of the antennas;
   modulating the signals using a control signal corresponding to a control channel respectively; and
   transmitting the modulated signals from each of the antennas using a single carrier transmission.

2. The control channel transmission method according to Claim 1, wherein, in the generating step, a cyclic shift amount is changed between each of the antennas so that the signals become orthogonal to each other on the frequency axis.

3. The control channel transmission method according to Claim 1 or 2, wherein the signal is a CAZAC sequence.

4. The control channel transmission method according to Claim 1, 2, or 3, wherein, in the modulating step, the control signal corresponding to the control channel is encoded, and each signal is modulated respectively using the encoded control signal.

5. The control channel transmission method according to any preceding claim, further comprising
   receiving control information from a radio communication apparatus at a transmission destination,
   wherein, in transmitting step, the transmission of the signal from each of the antennas is controlled based on the received control information.

6. A control channel transmission method in a radio communication apparatus which has a plurality of antennas, comprising:

   modulating a generated signal using a control signal corresponding to a control channel;
   allocating the modulated signal of each of the antennas to a different frequency band respectively; and
   transmitting the allocated signals from each of the antennas using a single carrier transmission.

7. The control channel transmission method according to Claim 6, wherein, in the modulating step, the control signal corresponding to the control channel is encoded, and the signal is modulated respectively using the encoded control signal.

8. The control channel transmission method according to Claim 6 or 7, further comprising
   receiving control information from a radio communication apparatus at a transmission destination,
   wherein, in the transmitting step, the transmission of the signal from each of the antennas is controlled based on the received control information.

9. A radio communication apparatus which has a plurality of antennas, comprising:

   a generation unit which generates signals that are orthogonal to each other on a frequency axis between each of the antennas;
   a modulation unit which modulates the signals using a control signal corresponding to a control channel respectively; and
   a transmission unit which transmits the modulated signals from each of the antennas using a single carrier transmission.

10. A radio communication apparatus which has a plurality of antennas, comprising:

a modulation unit which modulates a generated signal using a control signal corresponding to a control channel;
an allocation unit which allocates the modulated signal of each of the antennas to a different frequency band respectively; and
a transmission unit which transmits the allocated signal from each of the antennas using a single carrier transmission.

## FIG.1A

10

11     12-1

Control Bit 1    13-1    14-1    15-1    16-1    17-1

Control Bit 2

| ZC Sequence | → | Cyclic shift T1 | → ⊗ → | SC MAP | → | IFFT | → | CP | → |
|---|---|---|---|---|---|---|---|---|---|

| Cyclic shift T2 | → ⊗ → | SC MAP | → | IFFT | → | CP | → |

12-2    13-2    14-2    15-2   16-2   17-2

## FIG.1B

20

21    23    25    27    29    30-1

| CP Removal | → | FFT | → | SC Demap | → | SIMO Reception | → | ZC Cancellation T1 | → Control Bit 1 |
|---|---|---|---|---|---|---|---|---|---|

| CP Removal | → | FFT | → | SC Demap | → | ZC Cancellation T2 | → Control Bit 2 |

22    24    26    28    30-2

**FIG.2A**

**FIG.2B**

## FIG.3A

## FIG.3B

## FIG.4A

## FIG.4B

Transmission Band →

Cyclic Shift Amount ↓

| UE#1 Ant#1 | UE#3 Ant#1 |
|---|---|
| UE#2 Ant#1 | UE#4 Ant#1 |

FIG.5A

Transmission Band →

Cyclic Shift Amount ↓

| UE#1 Ant#1 | UE#3 Ant#1 |
|---|---|
| UE#1 Ant#2 | UE#4 Ant#1 |
| UE#2 Ant#1 | |
| UE#2 Ant#1 | |

FIG.5B

Transmission Band →

Cyclic Shift Amount ↓

| UE#1 Ant#1 | UE#1 Ant#2 |
|---|---|
| UE#2 Ant#1 | UE#2 Ant#1 |
| UE#3 Ant#1 | UE#4 Ant#1 |

FIG.5C

EP 2 134 024 A2

# FIG.6

RS: Reference Signal

EP 2 134 024 A2

## FIG.7A

100

11
ZC Sequence

Control Bit 1

12
Cyclic shift $T_1$

13
⊗

14
SC MAP

15
IFFT

16
CP

17

## FIG.7B

200

21

23
CP Removal

25
FFT

27
SC Demap

29
SIMO Reception

30
ZC Cancellation $T_1$

Control Bit 1

22

24
CP Removal

26
FFT

28
SC Demap

## FIG.8A

100

## FIG.8B

200

## FIG.9A

100

Control Bit 1

Control Bit 2

11 — ZC Sequence → 12 Cyclic shift T1 → 13-1 ⊗ → 14-1 SC MAP → 15-1 IFFT → 16-1 CP → 17-1

13-2 ⊗ → 14-2 SC MAP → 15-2 IFFT → 16-2 CP → 17-2

## FIG.9B

200

21 → 23 CP Removal → 25 FFT → 27 SC Demap → 50 MIMO Reception → 30-1 ZC Cancellation T1 → Control Bit 1

22 → 24 CP Removal → 26 FFT → 28 SC Demap → 30-2 ZC Cancellation T2 → Control Bit 2